# EUROPÄISCHE PATENTANMELDUNG

(11) **EP 3 434 471 A1**
(43) Veröffentlichungstag der Anmeldung: **30.01.2019**
(21) Anmeldenummer: 18075008.5
(22) Anmeldetag: 22.06.2018
(51) Int. Cl.: B32B 17/10

(54) **INSTRUMENT ZUR LUFTENTFERNUNG IN REPARATUR-SETS FÜR LAMINIERGLAS**

(30) Priorität: 26.07.2017 NL 1042482
(71) Anmelder: Carpe Diem B.V., 5061 JR Oisterwijk (NL)
(72) Erfinder: Schellekens, Johannes Wilhelmus Maria, 5061 JR Oisterwijk (NL)

(57) **Zusammenfassung**

Die Erfindung bezieht sich auf ein Instrument (1) für die Luftentfernung, das sich in einem Einspritzrohr (14) einer unterstützenden Konstruktion (15) von einem Reparatur-Set für die Instandsetzung von Beschädigungen in Lamellierglas (13) befindet, das häufig für Windschutzscheiben von Kraftfahrzeugen wie Pkws, Lkws u. Ä. verwendet wird. Das Instrument (1) besteht aus einem Rohr (2) mit einem Stift (10) und einer Achse (11) für die Anbringung des bezeichneten Stifts (10) mit einem Über- oder Unterdruck auf dem Harz (16) an der Bruchstelle im Lamellierglas (13).

Durch den relativ großen Inhalt des genannten Rohrs (2), das vollständig aus Kunststoff gefertigt ist, verläuft die Reparatur schnell und benutzerfreundlich. Bei vertikal angeordneten Fahrzeugscheiben von Lastkraftwagen ist das ebenfalls der Fall, weil das Instrument (1) kaum ein Drehmoment bei dem bezeichneten Einspritzrohr (14) bewirkt.

## Beschreibung

Die Erfindung bezieht sich auf ein Instrument zur Luftentfernung, das sich in einem Einspritzrohr eines Reparatur-Sets zum Auftrag von Harz bei Beschädigungen (durch Ein- oder Steinschlag) bei Scheiben aus Lamellierglas anbringen lässt, bei denen es sich häufig um Fahrzeugscheiben handelt, wobei sich die eingeschlossenen kleinen Luft- oder Gasblasen, Bruchteile u. Ä. optimal entfernen lassen; dafür befindet sich in einem Rohr ein Kolben und an der einen Seite ist ein Stift, während an der anderen Seite eine Achse beweglich ist, und der genannte Stift in dem Einspritzrohr einen Über- oder Unterdruck auf das Harz an der beschädigten Stelle des Lameliierglases ausübt.

Ein in einem bestimmten Umfang vergleichbares Gerät oder Instrument ist durch den zurückgezogenen europäischen Patentantrag EP 2429805 mit dem folgenden Titel bekannt: "Method and Tool for Repair of Laminated Glass" des Antragstellers Greentek/racing V/claus Gröndal, Nothedevej 46, DK-8600 Silkeborg, Dänemark. Der Erfinder ist Nielsen, Leif, Patrade A/S, Gredens Torv 3A, 8000 Aarhus C/Dänemark.

Es geht um eine Methode oder Arbeitsweise mit einem Gerät oder Instrument (Werkzeug) für die Reparatur eines Schadens in Lamellierglas, zum Beispiel an der Windschutzscheibe eines Kraftfahrzeugs, und zwar bei vielen Pkws, Lkws, Bussen u. Ä. Zu diesem Zweck wird ein Einspritzrohr vorübergehend an der Windschutzscheibe gegenüber der (durch Steinschlag) beschädigten Stelle angebracht. Das Einspritzrohr enthält Dichtungsmittel, die einen kräftigen Druck auf die Fahrzeugscheibe ausüben. Danach wird das Harz zum Füllen der Beschädigung in das Einspritzrohr geleitet. Im Anschluss wird eine Kolbenkonstruktion, und zwar ein Gerät für die Luftentfernung, unter dem Harz in der Beschädigung in dem besagten Einspritzrohr angebracht. Ein Kolbenkörper mit einem herausragenden Stift wird auf das Harz in der Beschädigung an der Scheibe gedrückt. Somit wird ein positiver Druck auf das Harz ausgeübt. Im Anschluss wird dieser Stift ein wenig angezogen. Durch relativ geringe Druckunterschiede werden dadurch sowohl Harz als auch Luft/Gasbläschen in das Einspritzrohr gesaugt. Dies ist auch der größte Kritikpunkt bezüglich dieses Geräts (Werkzeugs) aus EP2429805. Aufgrund der kleinen Kammer unter der besagten Stiftspitze wird nur ein geringer Über- und Unterdruck erzeugt. Außerdem geraten dadurch Harz, Luft und Verunreinigungen in das Einspritzrohr und das Harz härtet dann aufgrund des UV-Lichts aus, sodass das Einspritzrohr im Anschluss nicht mehr verwendet werden kann oder aufwändig gereinigt werden muss, weil die Demontage sehr schwierig ist. Ganz besonders in der Praxis hat sich herausgestellt, dass der geringe Über- und Unterdruck, der erzeugt werden muss, zu einer schlechten und unakzeptablen Reparatur der Beschädigung in der Lamellierscheibe führt.

Darüber hinaus ist das Gerät der obigen Erfindung (Werkzeug) in Metall ausgeführt, sodass die Reparatur von nahezu vertikalen Lkw-Windschutzscheiben durch das Drehmoment aufgrund des großen Gewichts und der Lage des Schwerpunkts, das auf das Einspritzrohr einwirkt (schwere Ausführung aus Metall), sehr problematisch wird. Zudem ist die bereits erwähnte Demontage des Geräts nach EP 2429805 problematisch bis unmöglich, sodass auch die weitere Instandhaltung nicht gut möglich ist. Außerdem wirkt sich die Verwendung einer Kolbenkonstruktion aus Metall bei niedrigeren Temperaturen negativ auf die Viskosität des Reparaturharzes aus.

Die vorliegende Erfindung umfasst als Ziel, ein angepasstes und verbessertes Instrument zur Luftentfernung im Reparatur-Set für Verbundglas zu schaffen, das nicht mit all den oben dargelegten Nachteilen verbunden ist, sondern stattdessen einige weitere betriebstechnische Vorteile bietet, sodass das Gerät auf wirtschaftlich sinnvolle Weise auf den Markt gebracht werden kann.

Dadurch ist das Instrument zur Luftentfernung in Reparatur-Sets für Lamellierglas gemäß der Erfindung auf sinnreiche Weise weiterentwickelt bzw. angepasst worden, was sich dadurch zeigt, dass das genannte Instrument mit seinem Rohr an der Seite des bezeichneten Stifts mit einer luftdichten Anschlusskonstruktion verschraubbar am Einspritzrohr angeschlossen ist, sodass der Stift (Länge L) über eine Länge X (X ∼1/4 L) ab dem Ende einen Durchmesser D1 hat, der kleiner als der Durchmesser D2 vom Rest des Stiftes ist, wobei die besagte Achse an der anderen Seite des Kolbens über eine Durchführungssicherung verfügt, die mit einer Arretiervorrichtung versehen ist, und das Achsenteil außerhalb des Rohrs über ein Querteil verfügt, damit der Über- oder Unterdruck auf das bezeichnete Harz in der beschädigten Scheibe ausgeübt werden kann, indem die Luftmenge unter dem Kolben verändert wird.

Als Vorteil verfügt man über ein Instrument zur Luftentfernung, das effektiv wirkt und einen ausreichend großen Über- und Unterdruck auf das Harz an der beschädigten Stelle des Verbundglases bewirkt, ohne dass Harz eingezogen wird, und das Gerät nicht oder kaum durch Harz u. Ä. verunreinigt wird. Eine Reinigung lässt sich durch die einfache Demontage gut vornehmen. Der große Über- und Unterdruck ist auf den relativ großen verfügbaren Rohrinhalt zurückzuführen.

Des Weiteren beträgt der Länge X ab dem Ende des Stifts ca. ein Viertel der Stiftlänge, sodass sich die zuerst zu entfernende Luft unter dem Harz problemlos ableiten lässt.

Außerdem wurde das Instrument gemäß der Erfindung weiterentwickelt, und zwar mit dem Merkmal, dass die genannte Verbindungskonstruktion aus einem mit einer Mutter verschließbaren Zylinder versehen ist, der mit einem Gewinde und einem Rand ausgeführt ist, und dieser Gummizylinder mit Rand in das Einspritzrohr des Reparatur-Sets eingesteckt werden kann.

Der Vorteil ist eine absolut dichte Verbindungskonstruktion, durch die ein Großteil der korrekten Funktionsweise des Instruments garantiert wird.

Zudem wurde das Instrument der Erfindung auf eine Weise mit dem Merkmal weiterentwickelt, dass die besagte Arretiervorrichtung aus mindestens einem drehbaren Bajonettverschluss auf der betreffenden Achse besteht und die Durchführungssicherung aus zwei Hälften aufgebaut ist.

Das bietet den Vorteil, dass ein bestimmter Über- und - vor allem - Unterdruck beibehalten wird.

Außerdem wurde das Instrument der Erfindung so mit dem Merkmal weiterentwickelt, dass das genannte Rohr aus einem sich fettig anfühlenden lichtdurchlässigen Kunststoff besteht, zum Beispiel aus 4-Methyl-1-Pentan, wobei der genannte Kolben - an der einen Seite mit dem Stift und an der anderen Seite der Achse - aus leichtem oder weißem Kunststoff gefertigt wurde, zum Beispiel aus HDPE.

Das bietet den Vorteil, dass sich gut verfolgen lässt, wie das Harz an der beschädigten Stelle der Lamellierscheibe angebracht wird. Auf diese Weise lässt sich von der Innenseite der zu reparierenden Scheibe gut wahrnehmen, dass die Luftblasen verschwinden.

Die Erfindung wird nachstehend anhand der bevorzugten Ausführung, die in der Zeichnung dargestellt wird, im Einzelnen erläutert. In diesem Kontext zeigt:
Abbildung 1 gemäß der Erfindung einen Längendurchschnitt des Instruments für die Luftentfernung, das im Einspritzrohr angebracht werden kann, welches sich seinerseits in dem zur Unterstützung über der Bruchstelle im Lamellierglas angebrachten Dreifuß befindet.
Abbildung 2 einen Längendurchschnitt des Instruments zur Luftentfernung gemäß Abbildung 1 in vollständig eingeschobenem Zustand (größter positiver Druck), und
Abbildung 3 einen Längendurchschnitt des Instruments zur Luftentfernung gemäß Abbildung 1 in einem normalen, ausgeschobenen Zustand; dabei ist ein beträchtlicher Unterdruck möglich.

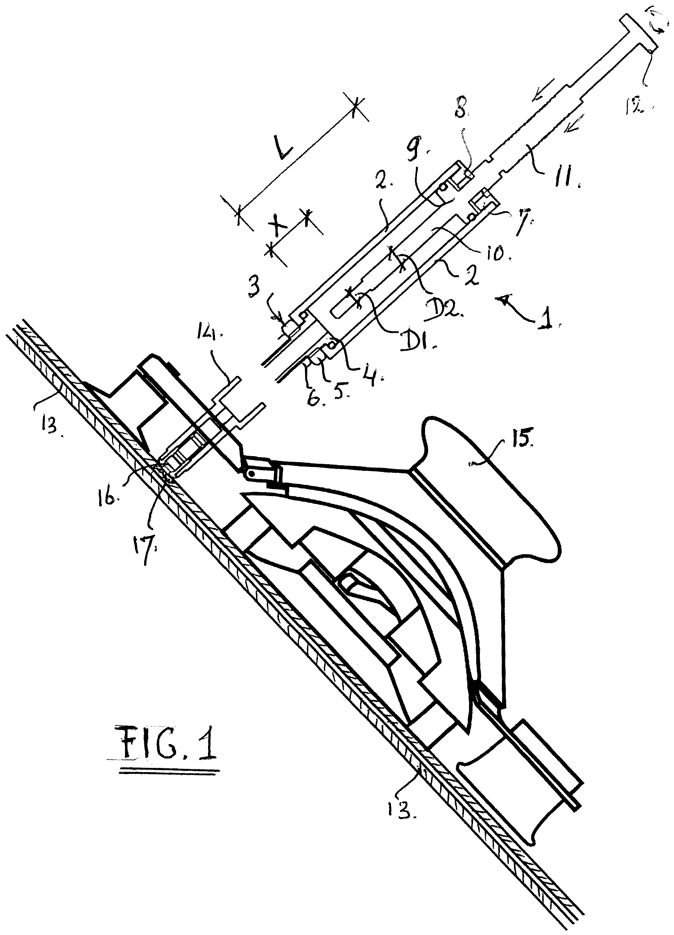

In Abbildung 1 wird ein Längendurchschnitt des Instruments zur Luftentfernung 1 gemäß der vorliegenden Erfindung dargestellt. Das Instrument zur Luftentfernung 1 besteht aus einem Rohr 2 mit einem relativ großen Volumen. An der Unterseite ist das Rohr 2 mit einer Verbindungskonstruktion 3 verschlossen, die aus einem Zylinder mit einem Außengewinde mit Rand 4 und einer Sicherungsmutter 5 besteht. Unter dem verbleibenden Gewinde wurde wiederum ein Gummizylinder mit Rand 6 angebracht. An der Oberseite ist das genannte Rohr 2 mit einer Durchführungssicherung 7, die für eine praktische Montage aus zwei Hälften besteht, mit einer Arretiervorrichtung 8 verschlossen. In Rohr 2 befindet sich der Kolben 9, bei dem ein Stift 10 mit der Länge L nach unten weist und dessen unterer Teil einen Durchmesser D1 über eine Länge X hat (X ∼ 1/4 L). Der Rest von Stift 10 hat einen Durchmesser D2, wobei D1 < D2. Rohr 2 besteht aus einem sich fettig anfühlenden, lichtdurchlässigen Kunststoff, zum Beispiel 4-Methyl-1-Pentan. Der Kolben ist an der Oberseite mit einer Achse 11 ausgeführt, die aus weißem HDPE besteht. Am Ende von Achse 11 befindet sich ein geschraubtes, ebenfalls aus HDPE gefertigtes Querstück 12. Die Luftmenge in Rohr 2 ist so gewählt, dass an der Reparaturstelle des Verbundglases 13 ein Unterdruck von ca. 80 kPa auftreten kann, während an der bestehenden Konstruktion nur 40 kPa möglich sind. Durch den großen Über- und Unterdruck entweicht die Luft schnell unter und durch das Harz. Das bietet große Vorteile bei den Arbeiten. An der Innenseite des Verbundscheibe ist durch den HDPE-Stift deutlich erkennbar, dass die Luft entweicht.

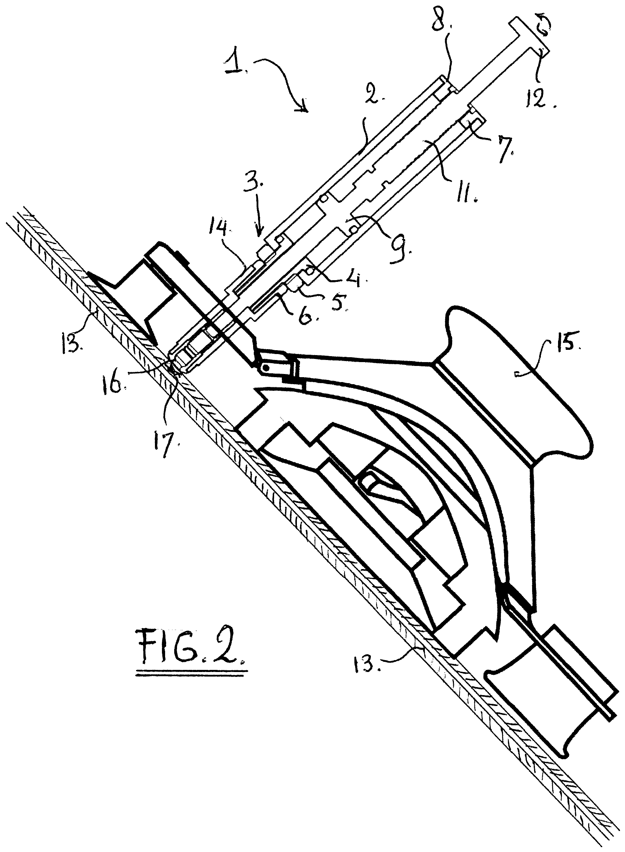

In Abbildung 1 wird das Gerät zur Luftentfernung 1 mit seinem Gummizylinder mit Rand 6 luftdicht in das Einspritzrohr 13 eingeführt, das durch eine unterstützende Konstruktion 15 gegen die Lamellierglasscheibe 13 gedrückt wird. Bereits zuvor sind einige Tropfen Harz 16 über das Einspritzrohr 14 in die Bruchstelle 17 geflossen. Nachdem das Instrument zur Luftentfernung 1 für die sich vor allem unter dem Harz befindliche Luft eingeschoben wird, kann Kolben 9 in den unteren Stand gestellt werden (siehe Abbildung 2).

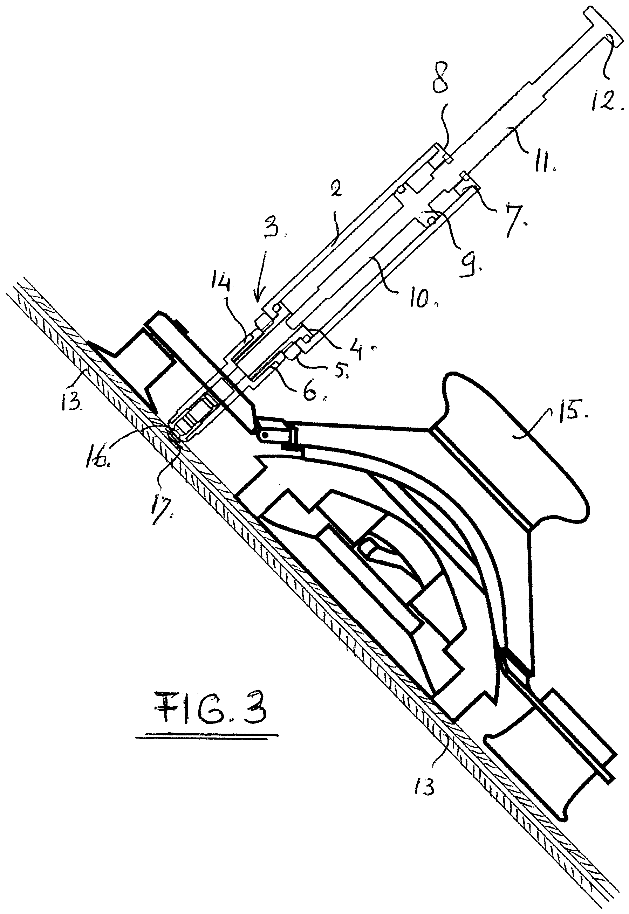

In Abbildung 3 ist der Stand des Kolbens 9 angegeben, der für die normale und effektive Ableitung der Luft unter und aus dem Harz 16 üblich ist.

In den Abbildungen 1, 2 und 3 werden die gleichen Einzelteile mit den gleichen Nummern gekennzeichnet.

Abschließend muss deutlich darauf hingewiesen werden, dass dafür eine empfohlene Ausführung der Erfindung beschrieben wurde und selbstverständlich weitere Anpassungen o. Ä. möglich sind, ohne dass der gesamte Bereich, der dem Gesamtschutz dieser Patentschrift unterliegt, verlassen wird.

## Patentansprüche

1. Instrument zur Luftentfernung, das sich in einem Einspritzrohr eines Reparatur-Sets für die Anbringung von Harz an (Steinschlag-)Beschädigungen an Scheiben auf Verbundglas anbringen lässt, und es dabei vor allem um Fahrzeugscheiben geht, bei denen sich mit dem bezeichneten Instrument eingeschlossene Luft- oder Gasbläschen, Bruchteile u. Ä. entfernen lassen, und das Instrument einen Kolben in einem Rohr mit an der einen Seite einen Stift und an der anderen Seite einer beweglichen Achse enthält, mit der der genannte Stift im Einspritzrohr einen Über- oder Unterdruck auf das Harz an der beschädigten Stelle des Verbundglases ausüben kann, **und dadurch gekennzeichnet, dass** das bezeichnete Instrument (1) mit seinem Rohr (2) an der Seite des bezeichneten Stifts (10) mit einer luftdichten Anschlusskonstruktion (3) verschraubbar am Einspritzrohr (14) angeschlossen ist, sodass der Stift (10) mit einer Länge L über eine Länge X (X ∼1/4 L) ab dem Ende einen Durchmesser D1 hat, der kleiner als der Durchmesser D2 vom Rest des Stiftes (10) ist, wobei die besagte Achse (11) an der anderen Seite des Kolbens (9) über eine Durchführungssperre (7) verfügt, die mit einer Arretiervorrichtung (8) versehen ist, und das Achsenteil (11) außerhalb des Rohrs (2) über ein Querteil (12) verfügt, damit der Über- oder Unterdruck auf das genannte Harz in der beschädigten Scheibe (13) ausgeübt werden kann, indem die Luftmenge unter dem Kolben (9) verändert wird.

2. Instrument nach Anspruch 1, **dadurch gekennzeichnet, dass** die genannte Anschlußkonstruktion (3) aus einem mit einer Mutter (5) verschließbaren Zylinder (4) aufgebaut ist, der mit einem Gewinde und einem Rand ausgeführt ist, und dieser Gummizylinder (4) mit Rand (6) in das Einspritzrohr (14) des Reparatur-Sets eingesteckt werden kann.

3. Instrument nach Anspruch 1, **dadurch gekennzeichnet, dass** genannte Arretiervorrichtung (8) mindestens besteht au seine verdrehbare Bajonettverschluß auf betriffte Achse (11), wobei die Durchführungssperre (7) aus zwei Hälften aufgebaut ist.

4. Instrument nach Anspruch 1, **dadurch gekennzeichnet, dass** das genannte Rohr (2) aus durchsichtigem Kunststoff besteht, zum Beispiel 4-Methyl-1-Pentan.

5. Instrument nach Anspruch 1, **dadurch gekennzeichnet, dass** der genannte Kolben (9) an der einen Seite mit dem Stift (10) und an der anderen Seite der Achse (11) aus Kunststoff gefertigt ist, zum Beispiel aus HDPE.

6. Instrument nach den obigen Ansprüche, **dadurch gekennzeichnet, dass** alle weiteren Dichtungen mit Silikondichtungen ausgeführt sind.

7. Instrument nach den Ansprüchen 1 - 3, **dadurch gekennzeichnet, dass** das Instrument (1) aufgrund der aus zwei Teilen aufgebauten Durchführungssicherung (7) für die Reinigung und Instandhaltung schnell und einfach auseinandergebaut werden kann.
